# EUROPÄISCHE PATENTSCHRIFT

(11) **EP 2 067 692 B1**
(45) Veröffentlichungstag und Bekanntmachung des Hinweises auf die Patenterteilung: **06.04.2011**
(21) Anmeldenummer: 08020813.5
(22) Anmeldetag: 01.12.2008
(51) Int. Cl.: B62H 5/18

(54) **Bremsscheibenschloss**
Brake disk lock
Serrure de frein à disques

(30) Priorität: 05.12.2007 DE 102007058550
(43) Veröffentlichungstag der Anmeldung: 10.06.2009
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-A- 1 764 292
- DE-U1- 9 419 272

## Beschreibung

Die vorliegende Erfindung betrifft ein Bremsscheibenschloss, mit einem Aufnahmespalt zur Aufnahme einer Bremsscheibe, mit einem Sicherungsabschnitt zum Verschließen des Aufnahmespalts, mit einer Alarmeinrichtung zum Ausgeben eines Alarmsignals, wobei die Alarmeinrichtung einen Bewegungssensor aufweist, mit einer beweglichen Bremsscheibenerkennungseinrichtung zur Detektion, ob sich eine Bremsscheibe in dem Aufnahmespalt befindet, und mit einem Schalter, um die Alarmeinrichtung zu aktivieren.

Ein derartiges Bremsscheibenschloss dient zum Sichern beispielsweise eines Motorrads, eines Motorrollers oder eines Quads gegen eine unbefugte Benutzung. Hierfür wird das Schloss derart an eine Bremsscheibe des geparkten Fahrzeugs angelegt, dass die Bremsscheibe in den Aufnahmespalt hineinragt. Daraufhin wird der Sicherungsabschnitt durch Betätigung des Schlosses in eine Stellung bewegt, in der der Sicherungsabschnitt den Aufnahmespalt durchquert und dabei durch eine Öffnung der Bremsscheibe geführt ist. In dieser Stellung wird der Sicherungsabschnitt verriegelt. Hierdurch ist das Schloss an der Bremsscheibe verschlossen und die Benutzung des Fahrzeugs wird verhindert, bis das Schloss wieder von der Bremsscheibe gelöst wird.

Unter einem Bewegungssensor ist ein Sensor zu verstehen, der eine Beschleunigung, eine Erschütterung, eine Lageänderung oder eine sonstige Bewegung des Schlosses detektiert. Wenn der Bewegungssensor eine derartige Bewegung detektiert, gibt die Alarmeinrichtung - sofern diese aktiviert ist - ein akustisches und/oder optisches Alarmsignal aus. Diese Alarmfunktion dient zum einen dazu, den befugten Benutzer des Fahrzeugs vor dem Losfahren gegebenenfalls daran zu erinnern, dass sich das Schloss noch an der Bremsscheibe befindet. Zum anderen erfüllt die Alarmeinrichtung auch eine Diebstahlwarnfunktion, da Aufbruchversuche zwangsläufig mit einer gewissen Bewegung oder Erschütterung des Bremsscheibenschlosses verbunden sind.

Um die Alarmeinrichtung automatisch zu aktivieren und zu deaktivieren, ist eine Bremsscheibenerkennungseinrichtung vorgesehen, die überprüft, ob sich eine Bremsscheibe gerade in der Bremsscheibenaufnahme befindet, wobei zutreffendenfalls die Alarmeinrichtung aktiviert und anderenfalls die Alarmeinrichtung deaktiviert ist.

In der DE 10 2005 0043 927 A1 ist ein Bremsscheibenschloss der eingangs genannten Art gezeigt, bei dem zur Aktivierung der Alarmeinrichtung eine "UND"-Kopplung nötig ist. Die Alarmeinrichtung ist nur dann aktiviert, wenn eine Bremsscheibe sich in der Bremsscheibenaufnahme befindet, um über die Bremsscheibenerkennungseinrichtung einen Schalter in eine Bereitschaftsstellung zu bringen, und wenn zugleich ein Verriegelungsmechanismus sich in einer Verriegelungsstellung befindet, um den Schalter zu betätigen.

Das in der DE 10 2005 043 927 A1 beschriebene Bremsscheibenschloss ist konstruktiv vergleichsweise aufwendig, da der Schalter in einer ersten Richtung federnd gelagert ist und in einer hierzu senkrechten zweiten Richtung betätigt wird.

Es ist Aufgabe der Erfindung, ein Bremsscheibenschloss der eingangs genannten Art zu schaffen, das einen einfacheren Aufbau aufweist.

Diese Aufgabe wird durch ein Bremsscheibenschloss mit den Merkmalen des Anspruchs 1 gelöst, und insbesondere durch ein Bremsscheibenschloss mit einem Aufnahmespalt zur Aufnahme einer Bremsscheibe, umfassend einen Sicherungsabschnitt zum Verschließen des Aufnahmespalts, eine Alarmeinrichtung zum Ausgeben eines Alarmsignals, wobei die Alarmeinrichtung einen Bewegungssensor aufweist, eine bewegliche Bremsscheibenerkennungseinrichtung zur Detektion, ob sich eine Bremsscheibe in dem Aufnahmespalt befindet, einen Druckschalter mit einem Kontaktelement, das von der Bremsscheibenerkennungseinrichtung gegen die Federkraft eines ersten Federmittels und relativ zu einem Schalterkörper des Druckschalters bewegbar ist, um die Alarmeinrichtung zu aktivieren, und einen Betätigungsabschnitt, der aus einer Freigabestellung in eine Sicherungsstellung bewegbar ist, um den Aufnahmespalt mittels des Sicherungsabschnitts zu verschließen. Es ist ein zweites Federmittel vorgesehen, über das der Betätigungsabschnitt in die Freigabestellung vorgespannt ist, wobei der Schalterkörper über das zweite Federmittel zumindest indirekt mit dem Betätigungsabschnitt gekoppelt ist, und wobei die beiden Federmittel derart aufeinander abgestimmt sind, dass bei der Bewegung des Betätigungsabschnitts in die Sicherungsstellung und bei Vorhandensein einer Bremsscheibe im Aufnahmespalt der Druckschalter entgegen der Federkraft des ersten Federmittels betätigt wird und eine verbleibende Relativbewegung zwischen der Bremsscheibenerkennungseinrichtung und dem Betätigungsabschnitt von dem zweiten Federmittel kompensiert wird.

Es sind also wenigstens zwei Federmittel vorgesehen. Das erste Federmittel ist dem Druckschalter zugeordnet, der zur Aktivierung der Alarmeinrichtung vorgesehen ist. Wird der Betätigungsabschnitt aus der Freigabestellung in die Sicherungsstellung bewegt, um mittels des Sicherungsabschnitts den Aufnahmespalt zu verschließen, wird gleichzeitig der Druckschalter, sofern in dem Aufnahmespalt eine Bremsscheibe aufgenommen ist, mittels der Bremsscheibenerkennungseinrichtung betätigt, d.h. der Betätigungsabschnitt und zumindest der Schalterkörper des Druckschalters werden jeweils relativ zu der Bremsscheibenerkennungseinrichtung bewegt. Bevorzugt wird bei einer Bewegung des Bremsscheibenschlosses das Alarmsignal trotz betätigtem Druckschalter nicht sofort ausgelöst, um dem befugten Benutzer ausreichend Zeit zum Anlegen und Entnehmen des Bremsscheibenschlosses von der Bremsscheibe zu geben.

Das zweite Federmittel ist dafür vorgesehen, den Schalterkörper des Druckschalters mit dem Betätigungsabschnitt zu koppeln, so dass eine Bewegung des Betätigungsabschnitts auch zu einer Bewegung des Schalterkörpers führt. Ist in dem Aufnahmespalt eine Bremsscheibe vorhanden, an der die Bremsscheibenerkennungseinrichtung anliegen kann, wird der Teil einer Relativbewegung zwischen dem Betätigungsabschnitt und der Bremsscheibenerkennungseinrichtung, der nicht durch das erste Federmittel aufgenommen wird, durch das zweite Federmittel aufgenommen.

Die beiden Federmittel sind dabei derart aufeinander abgestimmt, dass eine Bremsscheibe ausreichender Dicke auch sicher zu einer Betätigung des Druckschalters führt, wobei eine über die Betätigung des Druckschalters hinausgehende aufzunehmende Relativbewegung zumindest im Wesentlichen durch das zweite Federmittel aufgenommen wird. Um eine sichere Betätigung des Druckschalters bei in den Aufnahmespalt eingeführter Bremsscheibe zu gewährleisten, kann die Federkonstante des ersten Federmittels kleiner sein als die Federkonstante des zweiten Federmittels, so dass bei einer Bewegung des Betätigungsabschnitts in die Sicherungsstellung die Längenänderung des ersten Federmittels größer ist als die des zweiten Federmittels. Der Druckschalter ist damit bereits zu einem Zeitpunkt betätigt, zu dem die Längenänderung des zweiten Federmittels noch relativ gering ist.

Das zweite Federmittel ermöglicht, Bremsscheiben verschiedener Dicken in dem Aufnahmespalt aufzunehmen, wodurch eine Beschädigung des Druckschalters, dessen zugeordnetes erstes Federmittel gegebenenfalls nur verhältnismäßig kleine Dickenvariationen zulässt, vermieden werden kann. Da das zweite Federmittel eine federnde Lagerung für den Schalterkörper des Druckschalters bildet, kann der Druckschalter auch unmittelbar oder zumindest mittelbar durch die Bremsscheibenerkennungseinrichtung betätigt werden, ohne dass eine Beschädigung des Druckschalters befürchtet werden muss, wodurch ein einfacher Aufbau des Bremsscheibenschlosses gewährleistet werden kann. Dabei ist es bevorzugt, wenn das erste Federmittel und das zweite Federmittel im Wesentlichen in dieselbe Richtung wirken.

Darüber hinaus ist der Betätigungsabschnitt über das zweite Federmittel in die Freigabestellung vorgespannt. Dies erleichtert die Entnahme eines an einer Bremsscheibe angebrachten Bremsscheibenschlosses, da dann der Benutzer des Bremsscheibenschlosses nicht aktiv dafür sorgen muss, dass der Sicherungsabschnitt den Aufnahmespalt wieder frei gibt, sondern dies durch die Vorspannung der Gehäuseschale automatisch gewährleistet wird. Hierdurch wird die Handhabbarkeit des Bremsscheibenschlosses erhöht. Das zweite Federmittel übernimmt damit eine Doppelfunktion, nämlich das Vorspannen der Gehäuseschale in die Freigabestellung sowie die Aufnahme der vorstehend erläuterten verbleibenden Relativbewegung.

Um den Druckschalter vor einer übermäßigen Belastung und/oder Beschädigung zu schützen, ist in der Sicherungsstellung bei Vorhandensein einer Bremsscheibe im Aufnahmespalt und bei betätigtem Druckschalter die von dem ersten Federmittel ausgeübte Federkraft vorzugsweise kleiner als die von dem zweiten Federmittel ausgeübte Federkraft. Dies kann beispielsweise durch einen Anschlag für die Bremsscheibenerkennungseinrichtung erreicht werden, um den von dem ersten Federmittel aufgenommenen Teil der Relativbewegung zwischen der Bremsscheibenerkennungseinrichtung und dem Betätigungsabschnitt zu begrenzen.

Vorzugsweise ist der Betätigungsabschnitt als eine Gehäuseschale ausgebildet. Das Verschließen des Aufnahmespalts ist durch das Vorsehen des Betätigungsmittels in Form einer Gehäuseschale mit lediglich einer Hand und damit besonders einfach ausführbar. Die Gehäuseschale ist bevorzugt als eine Handhabe ausgebildet, innerhalb derer in der Freigabestellung und/oder Sicherungsstellung der Druckschalter, die Bremsscheibenerkennungseinrichtung und/oder ein Gehäuse der Alarmeinrichtung, insbesondere für wenigstens eine Batterie, zumindest teilweise aufgenommen ist.

Nach einer Ausbildung der Erfindung sind der Betätigungsabschnitt und der Druckschalter verschwenkbar zueinander angeordnet.

Der Druckschalter kann starr an einem Gehäuse der Alarmeinrichtung, insbesondere für wenigstens eine Batterie, angebracht sein. Insbesondere können der Betätigungsabschnitt und das Gehäuse der Alarmeinrichtung verschwenkbar zueinander angeordnet sein.

Bevorzugt ist ein Schlosskörper vorgesehen, der einen Abstützabschnitt und einer Hintergreifungsbügel aufweist, die den Aufnahmespalt begrenzen, wobei der Betätigungsabschnitt bezüglich des Abstützabschnitts und/oder bezüglich des Hintergreifungsbügels beweglich, insbesondere verschwenkbar, gelagert ist. Über den Abstützabschnitt kann das Bremsscheibenschloss an eine Bremsscheibe angedrückt werden. Der Hintergreifungsbügel hintergreift dabei die Bremsscheibe, so dass die Bremsscheibe in dem von dem Abstützabschnitt und dem Hintergreifungsbügel gebildeten Aufnahmespalt aufgenommen ist. Beim Andrücken des Bremsscheibenschlosses an die aufgenommene Bremsscheibe kann der bezüglich der Bremsscheibe insbesondere auf derselben Seite wie der Abstützabschnitt befindliche Betätigungsabschnitt aus der Freigabestellung in Richtung des Aufnahmespalts bewegt werden, wodurch ein Verschließen des Aufnahmespalts durch den Sicherungsabschnitt erreicht wird.

Nach einer anderen Ausbildung der Erfindung ist ein drittes Federmittel vorgesehen, über das der Schalterkörper mit dem Schlosskörper gekoppelt ist, insbesondere mit dem Abstützabschnitt oder dem Hintergreifungsbügel. Durch das zweite Federmittel und das dritte Federmittel kann eine schwimmende Lagerung der Alarmeinrichtung, des Druckschalters und/oder der Bremsscheibenerkennungseinrichtung zwischen der Gehäuseschale und dem Schlosskörper erreicht werden. Dadurch können mechanische oder thermische Längenänderungen der Bestandteile des Bremsscheibenschlosses aufgenommen und Toleranzen ausgeglichen werden. Darüber hinaus können zwei Federmittel mehr Federweg zur Aufnahme der Relativbewegung zwischen der Bremsscheibenerkennungseinrichtung und dem Betätigungsabschnitt zur Verfügung stellen, als dies bei lediglich einem Federmittel der Fall ist. Das dritte Federmittel kann ferner dafür vorgesehen sein, den Betätigungsabschnitt zusammen mit dem zweiten Federmittel in die Freigabestellung vorzuspannen bzw. zu drücken und/oder derart zu wirken, dass in der Freigabestellung der Schalterkörper und/oder die Bremsscheibenerkennungseinrichtung aus dem Aufnahmespalt gedrängt ist.

Das zweite Federmittel und das dritte Federmittel können im Wesentlichen identisch sein, zumindest identische Federkonstanten besitzen.

Der Abstützabschnitt kann mit der Bremsscheibenerkennungseinrichtung identisch sein. Hierdurch kann die Anzahl der für das Bremsscheibenschloss notwendigen Bauteile reduziert werden.

Nach einer anderen Ausgestaltung der Erfindung ist ein Riegel vorgesehen, wobei der Sicherungsabschnitt in der Sicherungsstellung mittels des Riegels (z.B. durch eine Automatikfunktion) verriegelt oder (z.B. durch eine Betätigung durch einen Benutzer) verriegelbar ist. Durch die Verriegelung des Sicherungsabschnitts kann eine gegebenenfalls automatische Bewegung der Gehäuseschale in die Freigabestellung wirksam unterbunden werden. Der Riegel kann beispielsweise über einen Schließzylinder des Schlosses, insbesondere eine mit dem Schließzylinder antriebswirksam verbundene Mitnehmereinrichtung, betätigt werden. Der Riegel kann von der Mitnehmereinrichtung separat oder aber mit dieser einstückig ausgebildet sein.

Gemäß einem Ausführungsbeispiel der Erfindung sind die Bremsscheibenerkennungseinrichtung und der Druckschalter verschwenkbar zueinander angeordnet. Insbesondere können der Betätigungsabschnitt, die Bremsscheibenerkennungseinrichtung und der Druckschalter eine gemeinsame Schwenkachse aufweisen.

Es kann ein Arretiermechanismus vorgesehen sein, wobei die Bremsscheibenerkennungseinrichtung in der Sicherungsstellung mittels des Arretiermechanismus in der den Druckschalter betätigenden Position gehalten ist. Beispielsweise kann ein an dem Mitnehmer angeformtes oder auf sonstige Weise mit dem Mitnehmer gekoppeltes Arretierelement vorgesehen sein, das in eine Arretieraufnahme des Abstützabschnitts und/oder der Bremsscheibenerkennungseinrichtung eingreift. Bevorzugt ist der Arretiermechanismus dabei derart ausgebildet, dass bei einem Aufbruchversuch, beispielsweise bei einer Meißel- oder Keilattacke, die zwischen der Bremsscheibe und dem Bremsscheibenschloss ansetzt, der Arretiermechanismus plastisch verformt wird, insbesondere derart, dass auch nach Wegnehmen der Keilkraft eine Drehung des Mitnehmers nicht mehr möglich ist.

Das Kontaktelement kann mittels des ersten Federmittels bezüglich des Schalterkörpers des Druckschalters vorgespannt sein. Grundsätzlich ist es jedoch auch möglich, dass das erste Federmittel bei nicht betätigtem Druckschalter entspannt ist.

Gemäß einem anderen Ausführungsbeispiel der Erfindung ist die Bremsscheibenerkennungseinrichtung in der Freigabestellung spielbehaftet zu dem Kontaktelement des Druckschalters gehalten.

Bei der Bewegung des Betätigungsabschnitts in die Sicherungsstellung kann die Bremsscheibenerkennungseinrichtung mitbewegt werden.

In der Freigabestellung kann die Bremsscheibenerkennungseinrichtung im Wesentlichen aus dem Aufnahmespalt herausgeschwenkt sein.

Weitere Ausführungsformen der Erfindung sind in den Unteransprüchen beschrieben.

Die Erfindung wird nachfolgend anhand zweier Ausführungsformen mit Bezug auf die Zeichnung beschrieben. In dieser zeigt:
- Fig. 1: ein erfindungsgemäßes Bremsscheibenschloss gemäß einer ersten Ausführungsform der Erfindung, mit einer Gehäuse- schale und einem Druckschalter, wobei die Gehäuseschale sich in einer Freigabestellung befindet und der Druckschalter unbetätigt ist, in verschiedenen Ansichten,
- Fig. 2: das Bremsscheibenschloss von Fig. 1, wobei die Gehäuse- schale sich in einer Sicherungsstellung befindet und der Druckschalter unbetätigt ist, in verschiedenen Ansichten,
- Fig. 3: das Bremsscheibenschloss von Fig. 1, wobei die Gehäuse- schale sich in einer Sicherungsstellung befindet und der Druckschalter betätigt ist, in verschiedenen Ansichten,
- Fig. 4: das Bremsscheibenschloss von Fig. 1, in einer Explosionsan- sicht,
- Fig. 5: das Bremsscheibenschloss von Fig. 1, mit einem Riegel, der sich in einer verriegelnden Ruheposition befindet, in einer Querschnittsansicht,
- Fig. 6: einen Schlosskörper des Bremsscheibenschlosses von Fig. 1, in einer Perspektivansicht,
- Fig. 7: das Bremsscheibenschloss von Fig. 1, mit einem Riegel, der sich in einer unverriegelnden Auslenkposition befindet, wobei gegenüber Fig. 1 die Gehäuseschale und ein Schlosskörper des Bremsscheibenschlosses weggelassen sind, in einer Per- spektivansicht,
- Fig. 8: das Bremsscheibenschloss von Fig. 1, mit zwei Druckfedern, wobei gegenüber Fig. 1 die Gehäuseschale weggelassen ist, in einer Perspektivansicht,
- Fig. 9: das Bremsscheibenschloss von Fig. 1, mit zwei Druckfedern, wobei gegenüber Fig. 1 die Gehäuseschale weggelassen ist, in einer Perspektivansicht,
- Fig. 10: ein erfindungsgemäßes Bremsscheibenschloss gemäß einer zweiten Ausführungsform der Erfindung, mit einer Gehäuse- schale und einem Druckschalter, wobei die Gehäuseschale sich in einer Freigabestellung befindet und der Druckschalter unbetätigt ist, in verschiedenen Ansichten,
- Fig. 11: das Bremsscheibenschloss von Fig. 10, wobei die Gehäuse- schale sich in einer Sicherungsstellung befindet und der Druckschalter unbetätigt ist, in verschiedenen Ansichten,
- Fig. 12: das Bremsscheibenschloss von Fig. 10, wobei die Gehäuse- schale sich in einer Sicherungsstellung befindet und der Druckschalter betätigt ist, in verschiedenen Ansichten,
- Fig. 13: das Bremsscheibenschloss von Fig. 10, in einer Explosions- ansicht,
- Fig. 14: einen Schließzylinder, einen Mitnehmer und einen Riegel des Bremsscheibenschlosses von Fig. 10, wobei der Riegel sich in einer verriegelnden Ruheposition befindet, in verschiedenen Ansichten,
- Fig. 15: einen Schließzylinder, einen Mitnehmer und einen Riegel des Bremsscheibenschlosses von Fig. 10, wobei der Riegel sich in einer unverriegelnden Auslenkposition befindet, in verschie- denen Ansichten, und
- Fig. 16: das Bremsscheibenschloss von Fig. 10, mit einem Arretierme- chanismus, wobei gegenüber Fig. 10 Teile des Bremsschei- benschlosses weggelassen sind.

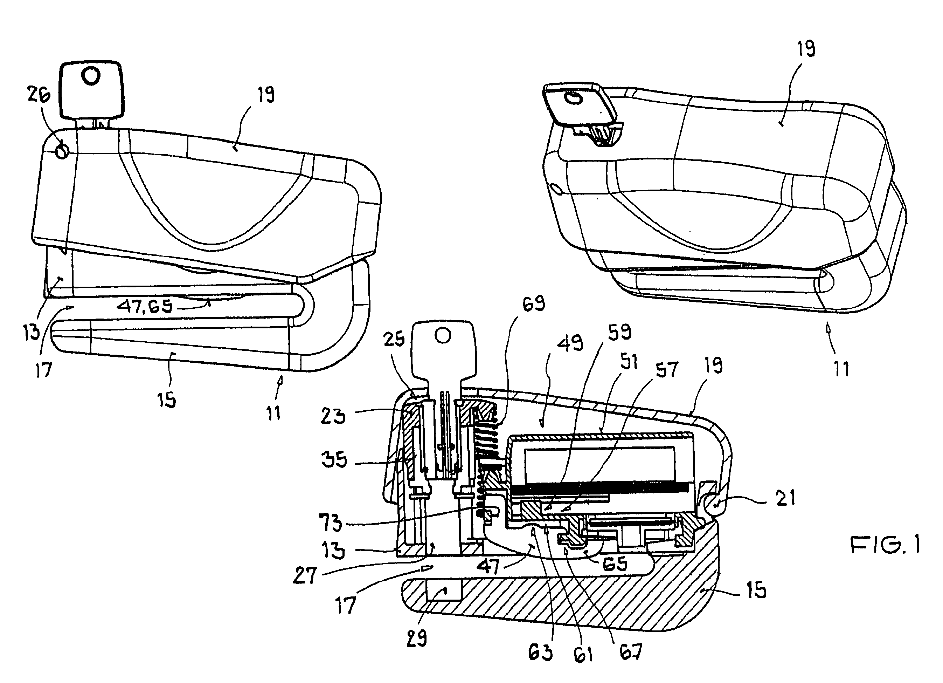

Das in den Fig. 1 bis 9 gezeigte Bremsscheibenschloss gemäß einer ersten Ausführungsform der Erfindung besitzt einen Schlosskörper 11 mit einem im Wesentlichen U-förmigen Aufbau. Der eine Schenkel dieser U-Form bildet einen Abstützabschnitt 13, mit dem das Bremsscheibenschloss gegen eine nicht dargestellte Bremsscheibe eines Motorrads oder dergleichen gedrückt werden kann, und der andere U-Schenkel bildet einen Hintergreifungsbügel 15. Der Abstützabschnitt 13 und der Hintergreifungsbügel 15 verlaufen im Wesentlichen parallel zueinander, und sie begrenzen einen Aufnahmespalt 17 zur Aufnahme der vorstehend genannten Bremsscheibe. Der Abstützabschnitt 13 und der Hintergreifungsbügel 15 sind dabei einstückig ausgebildet.

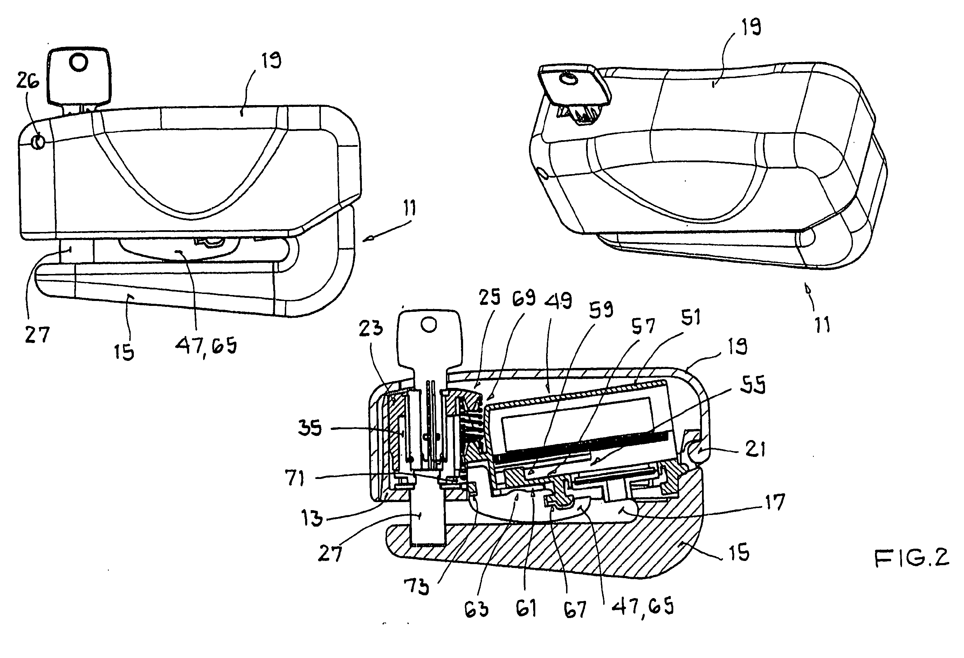

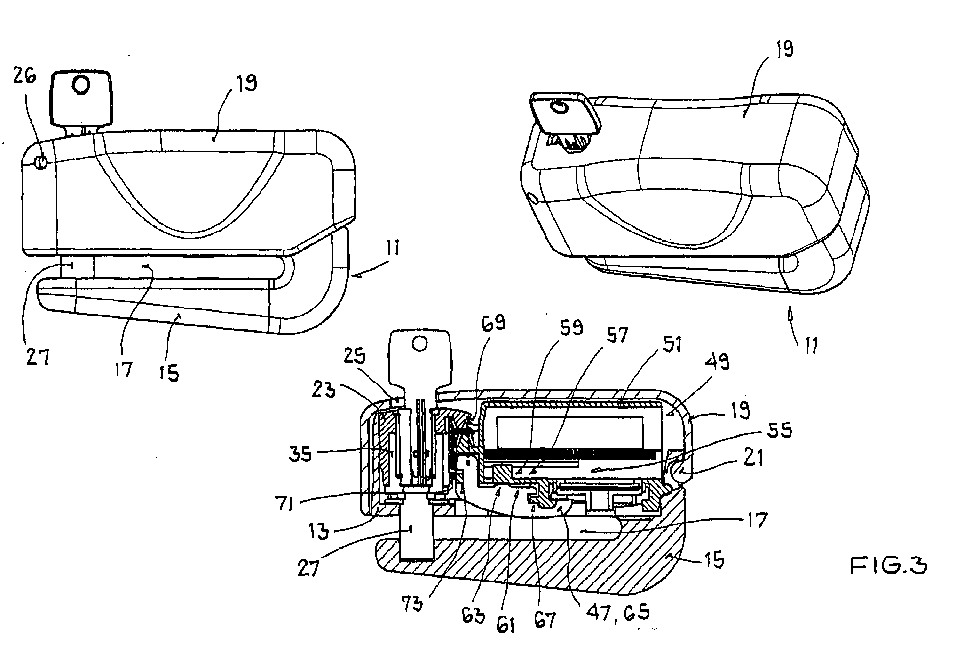

Darüber hinaus umfasst das Bremsscheibenschloss einen Betätigungsabschnitt, der als eine betätigbare Gehäuseschale 19 ausgebildet ist, die als eine Handhabe für einen Benutzer des Bremsscheibenschlosses fungiert. Die Gehäuseschale 19 und der Hintergreifungsbügel 15 sind bezüglich des Aufnahmespalts 17 auf verschiedenen Seiten angeordnet. Die Gehäuseschale 19, die sich also auf derselben Seite wie der Abstützabschnitt 13 befindet, ist schwenkbar an dem Abstützabschnitt 13 gelagert. Die Gehäuseschale 19 kann daher relativ zu dem Schlosskörper 11 aus einer Freigabestellung (Fig. 1) um eine Schwenkachse 21 in eine Sicherungsstellung (Fig. 2, 3) verschwenkt werden. Der Abstützabschnitt 13 ist in der Freigabestellung teilweise und in der Sicherungsstellung vollständig in der Gehäuseschale 19 aufgenommen.

Die Gehäuseschale 19 umschließt an ihrem freien Schwenkende ein Innengehäuse 23, in dem wiederum ein Schließzylinder 25 aufgenommen ist. Das Innengehäuse 23 ist innerhalb des Abstützabschnitts 13 verschieblich gelagert und ist mittels eines Haltezapfens 26 an der Gehäuseschale 19 angelenkt. Der Schließzylinder 25 ist bezüglich seiner Drehachse axialfest innerhalb des Innengehäuses 23 gelagert. In axialer Verlängerung des Schließzylinders 25 ist ein Sicherungsabschnitt des Schlosses vorgesehen, der hier als ein Schließbolzen 27 ausgebildet ist. Der Schließbolzen 27, der aus der Gehäuseschale 19 hervorsteht und in der Freigabestellung in Richtung des Aufnahmespalts 17 zeigt, ist dafür vorgesehen, in der Sicherungsstellung den in Fig. 1 offenen Aufnahmespalt 17 zu verschließen (Fig. 2, 3). Der Schließbolzen 27 ist über das Innengehäuse 23 mit der Gehäuseschale 19 verbunden.

Wird die Gehäuseschale 19 relativ zu dem Abstützabschnitt 13 aus der Freigabestellung (Fig. 1) in Richtung des Aufnahmespalts 17 in die Sicherungsstellung (Fig. 2, 3) bewegt bzw. geschwenkt, wird dabei gleichzeitig auch der Schließbolzen 27 in Richtung des Aufnahmespalts 17 gedrängt und durch diesen hindurch bewegt, um diesen in einer Verschlussstellung zu verschließen. In der Verschlussstellung greift der Schließbolzen 27 in eine in dem Hintergreifungsbügel 15 ausgebildete Ausnehmung 29 ein. Ein besonderer Vorteil des gezeigten Schlosses besteht somit darin, dass allein durch Andrücken der Gehäuseschale 19 gegen den sich an der Bremsscheibe abstützenden Abstützabschnitt 13 der Aufnahmespalt 17 mittels des Schließbolzens 27 verschlossen wird. Sofern zusätzlich die nachfolgend noch erläuterte Automatikfunktion verwirklicht ist, wird durch die Andrückbewegung der Gehäuseschale 19 zugleich das Schloss an der Bremsscheibe gesichert. Die Handhabung des Schlosses ist somit besonders einfach.

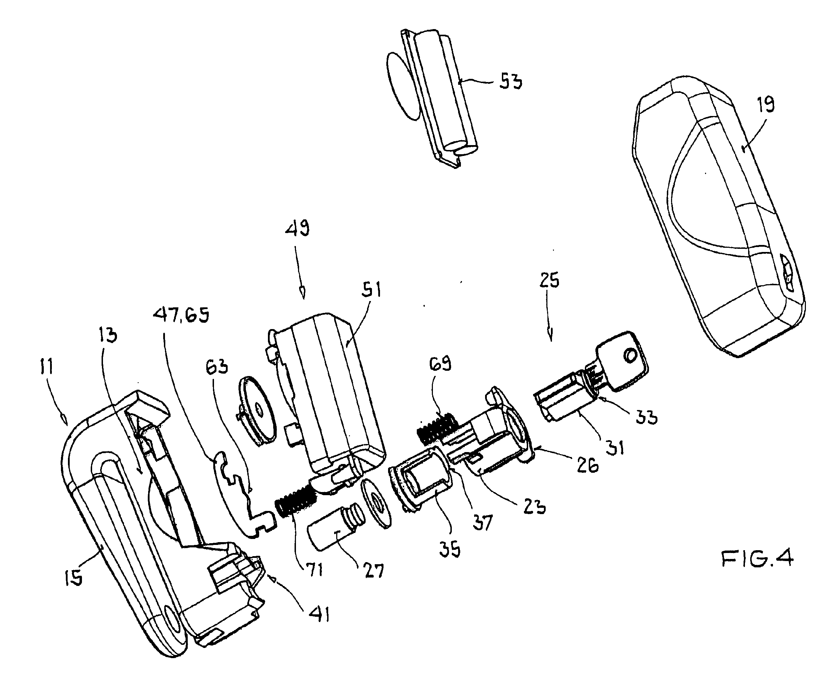

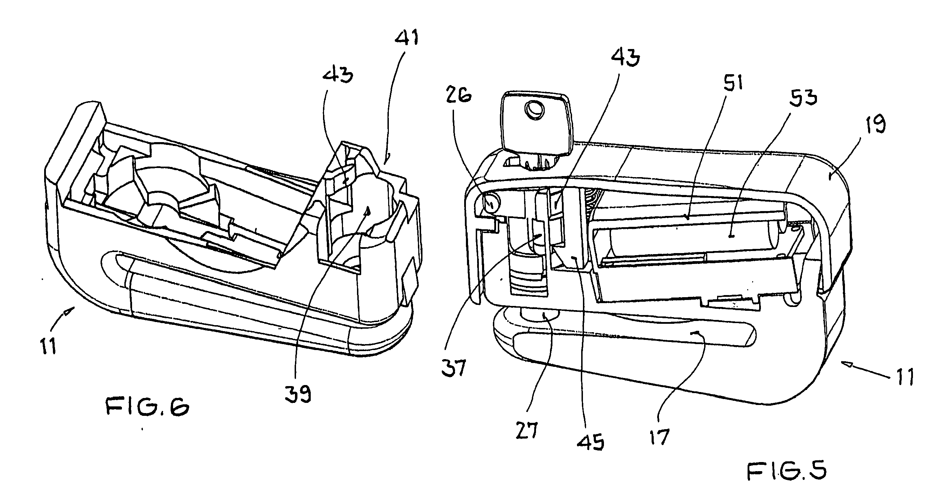

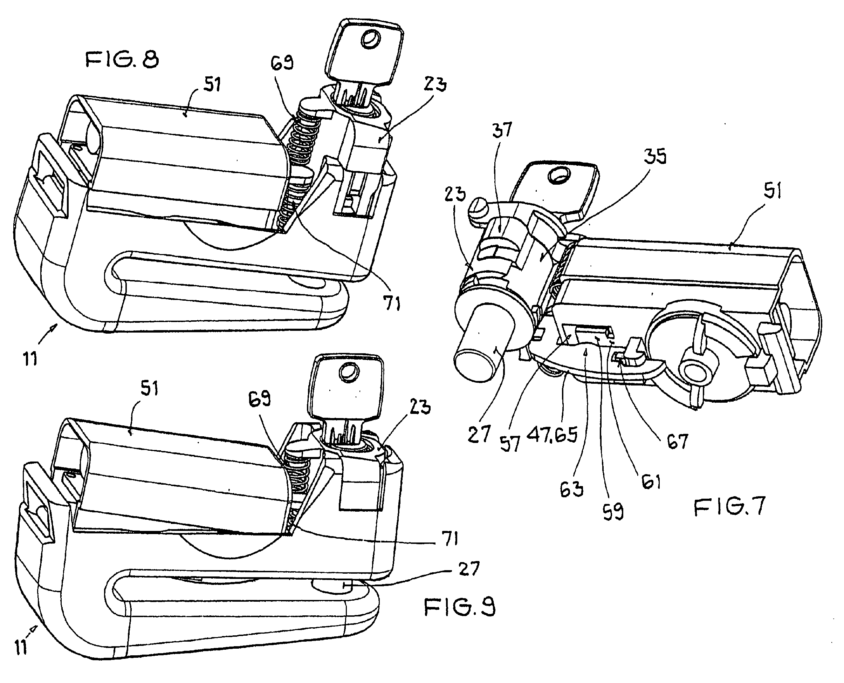

Der Schließzylinder 25 umfasst ein Zylindergehäuse 31 und einen innerhalb des Zylindergehäuses 31 angeordneten drehbeweglichen Zylinderkern 33 (Fig. 4). Das Zylindergehäuse 31 ist fest mit dem Innengehäuse 23 verbunden. Der Zylinderkern 33 ist antriebswirksam mit einem drehbeweglichen, axialfest gelagerten Mitnehmer 35 verbunden, an dem ein Riegel 37 einstückig angeformt ist (Fig. 5). Der Mitnehmer 35 und der Riegel 37 sind ebenfalls innerhalb der Gehäuseschale 19 aufgenommen. Der Schließbolzen 27 weist an seinem dem Mitnehmer 35 zugewandten Ende zunächst einen Hals und daran anschließend einen über den Hals radial nach außen vorstehenden Kopf auf. Der Mitnehmer 35 wiederum ist an seinem dem Schließbolzen 27 zugewandten Ende seitlich offen ausgebildet (Fig. 7) und weist an diesem Ende eine teilweise umlaufende, nach innen abkragende Schulter auf, um den Kopf des Schließbolzens 27 und damit den gesamten Schließbolzen 27 an dem Mitnehmer 35 zu halten.

Der Mitnehmer 35 und damit der Riegel 37 sind in eine verriegelnde Ruheposition (Fig. 5) vorgespannt, wodurch eine Automatikfunktion realisiert wird, welche durch eine lediglich in einer Drehrichtung drehfeste Kopplung zwischen einem Mitnehmerabschnitt des Zylinderkerns 33 und dem Mitnehmer 35 ermöglicht wird. Zur Realisierung der Vorspannung ist eine hier nicht gezeigte gebogene Mitnehmerdrehfeder vorgesehen, wie sie nachstehend in Verbindung mit einer zweiten Ausführungsform der Erfindung beschrieben ist. Die genannte Ruheposition kann jedoch nur in der Sicherungsstellung der Gehäuseschale 19 eingenommen werden. Der Mitnehmer 35, der axialfest mit der Gehäuseschale 19 gekoppelt ist, ist außerhalb der Sicherungsstellung nämlich in einer Nut 39 (Fig. 6) zwangsgeführt, die in einer im Bereich des freien Schwenkendes der Gehäuseschale 19 vorgesehenen Aufnahme 41 des Abstützabschnitts 13 für das Innengehäuse 23, für den Schließzylinder 25 und für den Schließbolzen 27 ausgebildet ist. Diese Nut 39 verhindert eine Drehbewegung des Mitnehmers 35, solange dieser nicht durch entsprechende Betätigung der Gehäuseschale 19 axial an das untere Ende der Nut 39 - also in Richtung des Aufnahmespalts 17 - bewegt worden ist.

In der Ruheposition greift der Riegel 37 zwischen eine nach innen vorstehende Auskragung 43 der Aufnahme 41 des Abstützabschnitts 13 einerseits und einen hakenförmigen Haltearm 45 andererseits ein, der mit seinem anderen Ende an einer Innenseite der Gehäuseschale 19 befestigt ist (Fig. 5). In der Ruheposition des Riegels 37 ist der Schließbolzen 27 damit verriegelt, d.h. der Schließbolzen 27 ist gegen eine axiale Bewegung aus der vorgenannten Verschlussstellung gesichert, da er oberseitig an dem axial verriegelten Mitnehmer 35 anliegt. Zugleich verhindert der Haltearm 45, dass die Gehäuseschale 19 sich zurück in die Freigabestellung bewegt.

Um den Riegel 37 aus seiner verriegelnden Ruheposition in eine unverriegelnde Auslenkposition (Fig. 7) zu überführen, wird der Riegel 37 durch eine entsprechende Drehbetätigung des Zylinderkerns 33 des Schließzylinders 25 mittels eines zugeordneten Schlüssels entgegen der Vorspannung in Richtung der Nut 39 gedreht, die eine axiale Bewegung des Mitnehmers 35 entlang der Aufnahme 41 des Abstützabschnitts 13 ermöglicht. Somit kann der an der Unterseite des Mitnehmers 35 anliegende Schließbolzen 27 sich nun aus dem Aufnahmespalt 27 herausbewegen, und die Gehäuseschale 19 kann nun aus der Sicherungsstellung in die Freigabestellung zurückschwenken.

Anstelle der erläuterten Schwenkbewegung kann natürlich auch eine rein translatorische Bewegung der Gehäuseschale 19 vorgesehen sein.

Die Gehäuseschale 19 umschließt in der Sicherungsstellung, sofern in der Sicherungsstellung in dem Aufnahmespalt 17 eine Bremsscheibe aufgenommen ist (Fig. 3), eine Bremsscheibenerkennungseinrichtung 47 des Bremsscheibenschlosses. Die Bremsscheibenerkennungseinrichtung 47 ist dafür vorgesehen, zu detektieren, ob eine Bremsscheibe sich in dem Aufnahmespalt 17 befindet. Darüber hinaus umschließt die Gehäuseschale 19 sowohl in der Freigabestellung als auch in der Sicherungsstellung eine Alarmeinrichtung 49 zum Ausgeben eines Alarmsignals. Die Alarmeinrichtung 49 umfasst einen nicht dargestellten Bewegungssensor, eine nicht bezeichnete Steuerplatine, eine nicht dargestellte Alarmausgabeeinrichtung, beispielsweise einen Lautsprecher, und ein Gehäuse 51 für wenigstens eine Batterie 53 (Fig. 5), für den Bewegungssensor und für die Steuerplatine.

Außerdem ist ein Druckschalter 55 vorgesehen, der ebenfalls in der Gehäuseschale 19 aufgenommen ist. Der Druckschalter 55 umfasst einen Schalterkörper 57, der starr an dem Gehäuse 51 der Alarmeinrichtung 49 befestigt ist, und ein Kontaktelement 59, das von der Bremsscheibenerkennungseinrichtung 47 gegen die Federkraft eines ersten Federmittels 61 und relativ zu dem Schalterkörper 57 bewegbar ist, um die Alarmeinrichtung 49 zu aktivieren. Das erste Federmittel 61 ist hier als ein Biegebalken oder alternativ beispielsweise als eine in dem Druckschalter 55 enthaltene Druckfeder ausgebildet, der bzw. die zwischen dem Schalterkörper 57 und dem Kontaktelement 59 wirkt. Bei einem Druckschalter handelt es sich allgemein um einen Schalter, der durch Drücken gegen eine Kraft, insbesondere gegen eine mechanische Federspannung, betätigt wird, um einen elektrischen Kontakt herzustellen.

Die Bremsscheibenerkennungseinrichtung 47 ist über einen Anlenkpunkt 67 an dem Schalterkörper 57 gehalten, und sie umfasst ein als Schalterwippe wirksames Schalterblech 65 mit einem gewölbten Ansatz 63. In der Freigabestellung der Gehäuseschale 19 (Fig. 1) und in der Sicherungsstellung der Gehäuseschale 19, sofern in der Sicherungsstellung in dem Aufnahmespalt 17 keine Bremsscheibe aufgenommen ist (Fig. 2), ist die Bremsscheibenerkennungseinrichtung 47 mit dem gewölbten Ansatz 63 des Schalterblechs 65 spielbehaftet zu dem Kontaktelement 59 des Druckschalters 55 angeordnet, so dass der Druckschalter 55 in den Fig. 1 und 2 nicht betätigt ist. Die Sicherungsstellung gemäß Fig. 2 ist zum Mitführen bzw. Transportieren des Bremsscheibenschlosses vorgesehen.

Das Gehäuse 51 der Alarmeinrichtung 49 und damit der daran fest angebrachte Druckschalter 55 sind sowohl relativ zu der Gehäuseschale 19 als auch relativ zu dem Schlosskörper 11 im Wesentlichen um die Schwenkachse 21 der Gehäuseschale 19 verschwenkbar.

Die Alarmeinrichtung 49 und der Druckschalter 55 sind über ein zweites Federmittel 69 (Fig. 8, 9), das als eine Druckfeder ausgebildet ist und eine größere Federkonstante aufweist als das erste Federmittel 61, mit der Gehäuseschale 19 gekoppelt. Darüber hinaus sind die Alarmeinrichtung 49 und der Druckschalter 55 über ein drittes Federmittel 71 (Fig. 8, 9), das mit dem zweiten Federmittel 69 im Wesentlichen identisch ist, mit dem Schlosskörper 11 bzw. dessen Abstützabschnitt 13 gekoppelt. Das erste Federmittel 61 und das zweite Federmittel 69 wirken in im Wesentlichen dieselbe Richtung. Durch die zweiten und dritten Federmittel 69, 71 wird eine schwimmende Lagerung der Alarmeinrichtung 49, des Druckschalters 55 und der Bremsscheibenerkennungseinrichtung 47 zwischen der Gehäuseschale 19 und dem Schlosskörper 11 erreicht.

Durch das zweite Federmittel 69 wird erreicht, dass bei der Bewegung der Gehäuseschale 19 in die Sicherungsstellung (Fig. 2, 3) die Alarmeinrichtung 49, der Druckschalter 55 und damit die Bremsscheibenerkennungseinrichtung 47 mitbewegt wird. Durch das zweite Federmittel 69, insbesondere durch das zweite Federmittel 69 und das dritte Federmittel 71, wird eine Vorspannung der Gehäuseschale 19 in die Freigabestellung und relativ zu dem Abstützabschnitt 13 erreicht. Durch das dritte Federmittel 69 wird die Alarmeinrichtung 49 und damit der Druckschalter 55 aus dem Aufnahmespalt 17 gedrängt, so dass in der Freigabestellung (Fig. 1) die an dem Schalterkörper 57 gehaltene Bremsscheibenerkennungseinrichtung 47 im Wesentlichen aus dem Aufnahmespalt 19 herausgeschwenkt ist. Durch das Zusammenwirken des zweiten Federmittels 69 mit dem dritten Federmittel 71 wird somit erreicht, dass die Bremsscheibenerkennungseinrichtung 47 erst dann in den Aufnahmespalt 17 bewegt wird, wenn die Gehäuseschale 19 in Richtung des Abstützabschnitts 13 gedrückt wird, nachdem eine Bremsscheibe in den Aufnahmespalt 17 eingeführt worden ist. Die Bremsscheibenerkennungseinrichtung 47 kann somit als ein einfaches Blechteil 65 ausgebildet sein, und muss beispielsweise nicht etwa ballig oder mit einer sonstigen besonderen Formgebung ausgeführt sein.

Das erste Federmittel 61 und das zweite Federmittel 69 sind derart aufeinander abgestimmt, dass bei der Bewegung der Gehäuseschale 19 aus der Freigabestellung in die Sicherungsstellung, sofern in dem Aufnahmespalt 17 eine Bremsscheibe aufgenommen ist (Fig. 3), auf jeden Fall der Druckschalter 55 bzw. dessen Kontaktelement 59 entgegen der Federkraft des ersten Federmittels 61 betätigt wird. Hierbei bewegt sich die Gehäuseschale 19 relativ zu der Bremsscheibenerkennungseinrichtung 47. Das in den Fig. 1 und 2 zwischen der Bremsscheibenerkennungseinrichtung 47 und dem Druckschalter 55 vorhandene Spiel wird dabei beseitigt. Eine darüberhinausgehende, verbleibende Relativbewegung zwischen der Gehäuseschale 19 und der Bremsscheibenerkennungseinrichtung 47 wird von dem zweiten Federmittel 69 aufgenommen. Durch das Zusammenwirken des ersten Federmittels 61 und des zweiten Federmittels 69 wird somit erreicht, dass für Bremsscheiben unterschiedlicher Dicke stets ein zuverlässiges Aktivieren der Alarmeinrichtung 49 gewährleistet ist.

Um eine Beschädigung des ersten Federmittels 61 zu vermeiden, ist ein Anschlag 73 für die Bremsscheibenerkennungseinrichtung 47 vorgesehen. Hierdurch wird der Federweg des ersten Federmittels 61 und damit der Teil der Relativbewegung zwischen der Gehäuseschale 19 und der Bremsscheibenerkennungseinrichtung 47, der von dem ersten Federmittel 61 aufgenommen wird, begrenzt. In der Sicherungsstellung, sofern in dem Aufnahmespalt 17 eine Bremsscheibe aufgenommen ist (Fig. 3), ist die von dem ersten Federmittel 61 ausgeübte Federkraft daher kleiner als die von dem zweiten Federmittel 69 ausgeübte Federkraft.

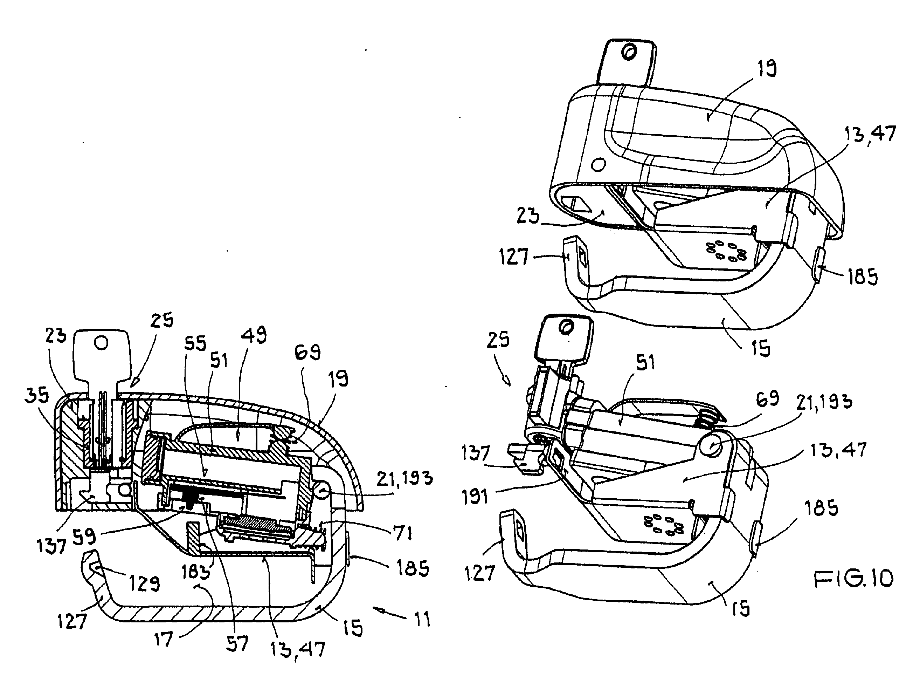

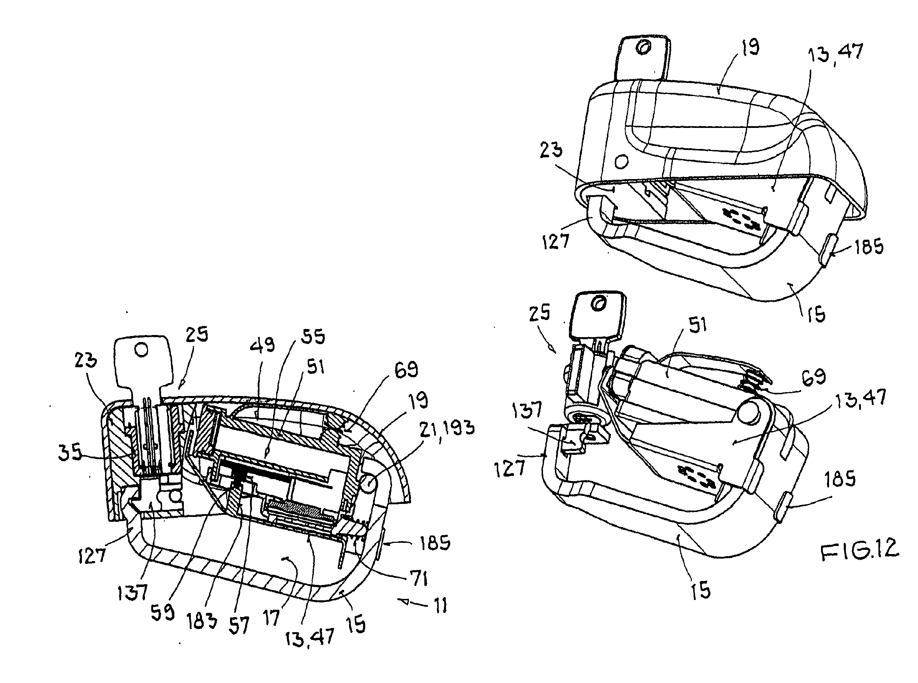

Das in den Fig. 10 bis 16 gezeigte Bremsscheibenschloss gemäß einer zweiten Ausführungsform der Erfindung entspricht im Wesentlichen dem Bremsscheibenschloss gemäß der ersten Ausführungsform, so dass einander entsprechende Teile der beiden Ausführungsformen mit denselben Bezugszeichen versehen sind. Auf eine erneute Vorstellung dieser Teile, deren Funktion und Zusammenwirken mit anderen Teilen wird verzichtet und es wird diesbezüglich auf die vorstehende Beschreibung zu dem Bremsscheibenschloss gemäß der ersten Ausführungsform verwiesen. Daher werden im Folgenden lediglich die Abweichungen der zweiten Ausführungsform gegenüber der ersten Ausführungsform erläutert.

Der Sicherungsabschnitt, der bei dem Bremsscheibenschloss gemäß der ersten Ausführungsform als der Schließbolzen 27 ausgebildet ist, entspricht bei dem Bremsscheibenschloss gemäß der zweiten Ausführungsform dem umgebogenen freien Ende 127 des Hintergreifungsbügels 15. Das freie Ende 127 des Hintergreifungsbügels 15 weist eine Ausnehmung 129 auf, in die in der Sicherungsstellung der Gehäuseschale 19 ein Riegel 137 eingreift, um das freie Ende 127 des Hintergreifungsbügels 15 zu verriegeln. Der Riegel 137 ist innerhalb der Gehäuseschale 19 und in axialer Verlängerung des Schließzylinders 25 angeordnet.

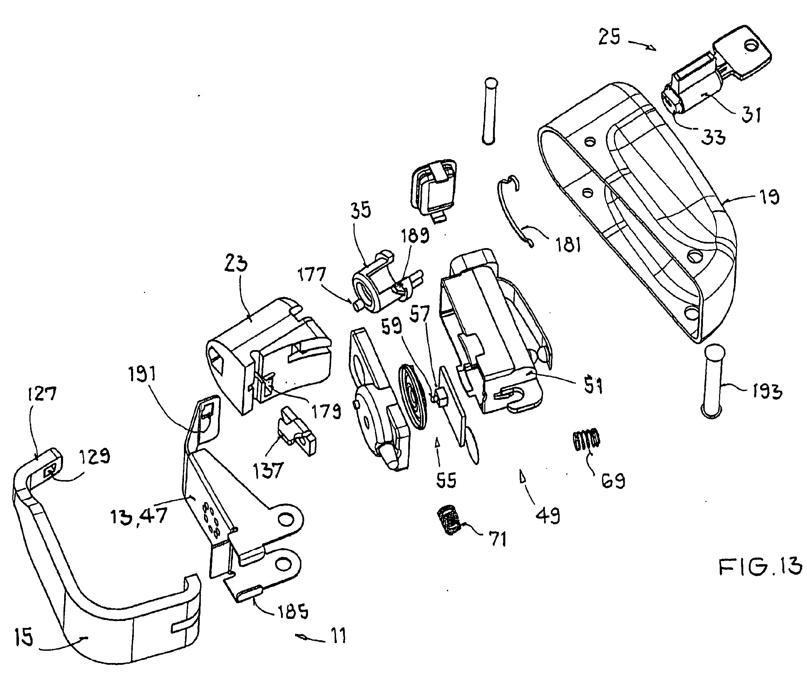

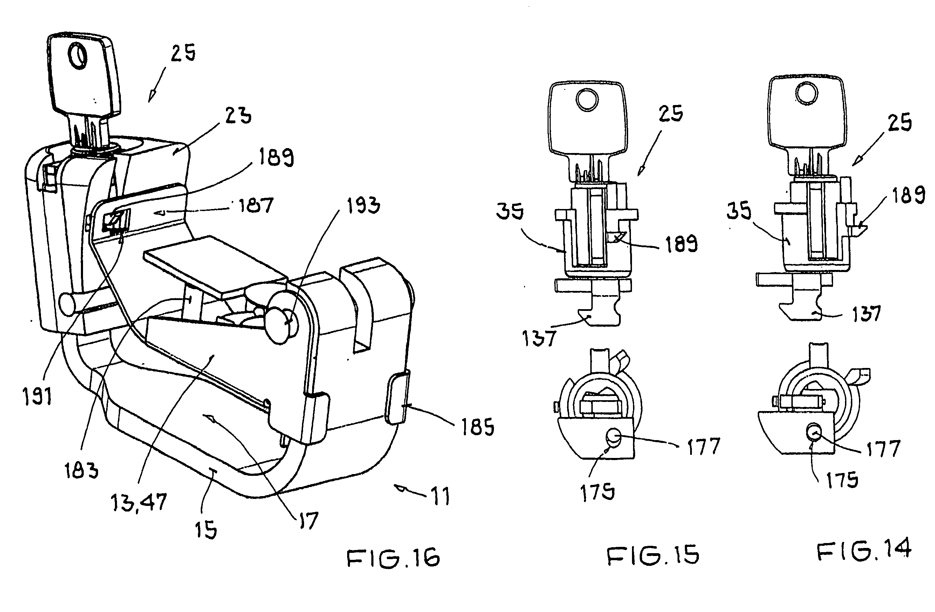

Der Riegel 137 ist über ein Langloch 175 (Fig. 14, 15) mit einem Mitnehmerzapfen 177 des Mitnehmers 35 gekoppelt und in einer in dem Innengehäuse 23 ausgebildeten Riegelführung 179 (Fig. 13) zwangsgeführt, so dass eine Drehbewegung des Zylinderkerns 33 des Schließzylinders 25 in eine lineare Bewegung des Riegels 137 senkrecht zu der Längsachse des Schließzylinders 25 umgesetzt wird, wodurch der Riegel 137 zwischen der verriegelnden Ruheposition (Fig. 14) und der unverriegelnde Auslenkposition (Fig. 15) bewegbar ist. Der Mitnehmer 35 und damit der Riegel 137 sind über eine Mitnehmerdrehfeder 181 (Fig. 13) in die verriegelnde Ruheposition vorgespannt, um die Automatikfunktion zu gewährleisten.

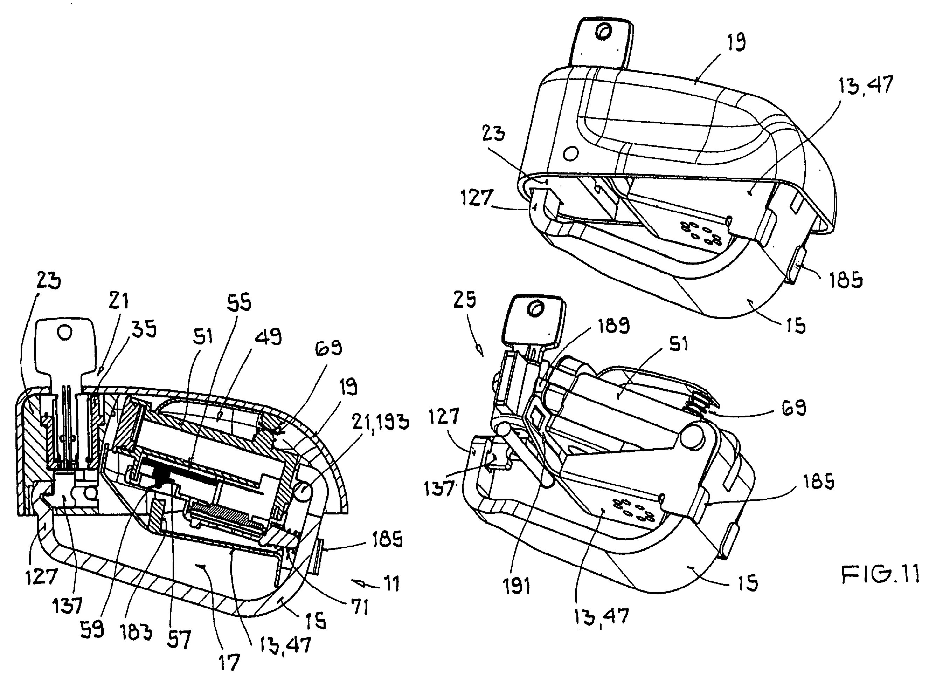

Darüber hinaus ist der Schlosskörper 11 des Bremsscheibenschlosses gemäß der zweiten Ausführungsform zweistückig ausgebildet. Der Abstützabschnitt 13 und der Hintergreifungsbügel 15 sind verschwenkbar zueinander gelagert, wobei der Abstützabschnitt 13, der Hintergreifungsbügel 15 und die Gehäuseschale 19 eine gemeinsame Schwenkachse aufweisen, die durch einen Niet 193 gebildet ist, wobei der Niet 193 im Bereich der Basis des U-förmigen Schlosskörpers 11 durch entsprechende Bohrungen in der Gehäuseschale 19 und in dem Abstützabschnitt 13 hindurchgesteckt ist. Durch die zweiteilige Ausbildung des Schlosskörpers 11 wird bei dem Bremsscheibenschloss gemäß der zweiten Ausführungsform ermöglicht, dass der Druckschalter 55 in der Sicherungsstellung der Gehäuseschale 19, sofern in dem Aufnahmespalt 17 keine Bremsscheibe aufgenommen ist (Fig. 11), nicht betätigt ist, da der Abstützabschnitt 13 bei dem Bremsscheibenschloss gemäß der zweiten Ausführungsform gleichzeitig auch der Bremsscheibenerkennungseinrichtung 47 entspricht.

An seiner dem Aufnahmespalt 17 abgewandten Seite ist an dem Abstützabschnitt 13 bzw. der Bremsscheibenerkennungseinrichtung 47 oder an einer nicht gezeigten Dichtfläche für die Alarmeinrichtung 19 ein Betätigungsstift 183 angeformt, durch den der Druckschalter 55 betätigt wird, wenn die Gehäuseschale 19 aus der Freigabestellung in die Sicherungsstellung geschwenkt wird, sofern in dem Aufnahmespalt 17 eine Bremsscheibe aufgenommen ist.

Der Druckschalter 55 gemäß der zweiten Ausführungsform ist als eine Drucktaste ausgebildet, bei der das Kontaktelement 59 mittels einer integrierten, nicht gezeigten Druckfeder, die dem ersten Federmittel und somit dem Biegebalken 61 der ersten Ausführungsform entspricht, bezüglich des Schalterkörpers 57 in Richtung einer den Druckschalter 55 nicht betätigenden Position vorgespannt ist. Diese Druckfeder (als erstes Federmittel) wirkt mit einer Druckfeder 69 (als zweites Federmittel) zusammen und ist mit dieser abgestimmt, wie im Zusammenhang mit der ersten Ausführungsform erläutert.

Da der Druckschalter 55 an dem Gehäuse 51 der Alarmeinrichtung, die ebenfalls um den Niet 193 schwenkbar ist, starr befestigt ist, sind auch der Abstützabschnitt 13 bzw. die Bremsscheibenerkennungseinrichtung 47 und der Druckschalter 55 relativ zueinander verschwenkbar. Letztendlich sind die Gehäuseschale 19, das Gehäuse 51 der Alarmeinrichtung 49, der Druckschalter 55, der Hintergreifungsbügel 15 und der Abstützabschnitt 13 bzw. die Bremsscheibenerkennungseinrichtung 47 relativ zueinander um die gemeinsame Schwenkachse 21 verschwenkbar.

Der Abstützabschnitt 13 weist zwei Mitnehmerkrallen 185 auf, die den in Richtung des Niets 193 gerichteten Abschnitt des Hintergreifungsbügels 15 umgreifen. Hierdurch wird bei der Bewegung der Gehäuseschale 19 relativ zu dem Abstützabschnitt 13 aus der Freigabestellung in die Sicherungsstellung sichergestellt, dass die Gehäuseschale 19 in im Wesentlichen entsprechender Weise relativ zu dem Hintergreifungsbügel 15 bewegt wird, oder umgekehrt. Wird der Abstützabschnitt 13 durch Drücken des Bremsscheibenschlosses in Richtung der Bremsscheibe gegen die Bremsscheibe gedrückt, wird der Hintergreifungsbügel 15 mitgenommen, wodurch der Aufnahmespalt 17 verschlossen wird. Der Abstützabschnitt 13 bzw. die Bremsscheibenerkennungseinrichtung 47 betätigt also sowohl den Hintergreifungsbügel 15 als auch den Druckschalter 55.

Das dritte Federmittel 71 stützt sich - anders als bei dem Bremsscheibenschloss gemäß der ersten Ausführungsform - nicht an dem Abstützabschnitt 13 sondern an dem Hintergreifungsbügel 15 ab, so dass die Gehäuseschale 19 relativ zu dem Hintergreifungsbügel 15 in Richtung der Freigabestellung vorgespannt ist.

Darüber hinaus ist bei dem Bremsscheibenschloss gemäß der zweiten Ausführungsform ein Arretiermechanismus 187 (Fig. 16) vorgesehen, um den Betätigungsstift 183 der Bremsscheibenerkennungseinrichtung 47 in der den Druckschalter 55 betätigenden Position zu halten. Hierzu ist an dem Mitnehmer 35 eine Mitnehmernase 189 ausgebildet, die in der verriegelnden Ruheposition des Riegels 137 in ein an dem freien Ende des Abstützabschnitts 13 ausgebildetes Fenster 191 eingreift.

Zu den beiden erläuterten Ausführungsformen ist noch anzumerken, dass anstelle einer Automatikfunktion auch eine in beiden Drehrichtungen wirksame Zwangssteuerung des Mitnehmers 35 mittels des Schließzylinders 25 vorgesehen sein kann.

### Bezugszeichenliste

- 11: Schlosskörper
- 13: Abstützabschnitt
- 15: Hintergreifungsbügel
- 17: Aufnahmespalt
- 19: Gehäuseschale
- 21: Schwenkachse
- 23: Innengehäuse
- 25: Schließzylinder
- 26: Haltezapfen
- 27: Schließbolzen
- 29: Ausnehmung
- 31: Zylindergehäuse
- 33: Zylinderkern
- 35: Mitnehmer
- 37: Riegel
- 39: Nut
- 41: Aufnahme
- 43: Auskragung
- 45: Haltearm
- 47: Bremsscheibenerkennungseinrichtung
- 49: Alarmeinrichtung
- 51: Gehäuse
- 53: Batterie
- 55: Druckschalter
- 57: Schalterkörper
- 59: Kontaktelement
- 61: erstes Federmittel
- 63: Ansatz
- 65: Schalterblech
- 67: Anlenkpunkt
- 69: zweites Federmittel
- 71: drittes Federmittel
- 73: Anschlag
- 127: freies Ende
- 129: Einnehmung
- 137: Riegel
- 175: Langloch
- 177: Mitnehmerzapfen
- 179: Riegelführung
- 181: Mitnehmerdrehfeder
- 183: Betätigungsstift
- 185: Mitnehmerkralle
- 187: Arretiermechanismus
- 189: Mitnehmernase
- 191: Fenster
- 193: Niet

## Patentansprüche

1. Bremsscheibenschloss mit einem Aufnahmespalt (17) zur Aufnahme einer Bremsscheibe, umfassend:
einen Sicherungsabschnitt (27, 127) zum Verschließen des Aufnahmespalts (17),
eine Alarmeinrichtung (49) zum Ausgeben eines Alarmsignals, wobei die Alarmeinrichtung (49) einen Bewegungssensor aufweist,
eine bewegliche Bremsscheibenerkennungseinrichtung (47) zur Detektion, ob sich eine Bremsscheibe in dem Aufnahmespalt (17) befindet,
einen Druckschalter (55) mit einem Kontaktelement (59), das von der Bremsscheibenerkennungseinrichtung (47) gegen die Federkraft eines ersten Federmittels (61) und relativ zu einem Schalterkörper (57) des Druckschalters (55) bewegbar ist, um die Alarmeinrichtung (49) zu aktivieren, und
einen Betätigungsabschnitt (19), der aus einer Freigabestellung in eine Sicherungsstellung bewegbar ist, um den Aufnahmespalt (17) mittels des Sicherungsabschnitts (27, 127) zu verschließen,
**dadurch gekennzeichnet,**
**dass** ein zweites Federmittel (69) vorgesehen ist, über das der Betätigungsabschnitt (19) in die Freigabestellung vorgespannt ist, wobei der Schalterkörper (57) über das zweite Federmittel (69) mit dem Betätigungsabschnitt (19) gekoppelt ist, und wobei die beiden Federmittel (61, 69) derart aufeinander abgestimmt sind, dass bei der Bewegung des Betätigungsabschnitts (19) in die Sicherungsstellung und bei Vorhandensein einer Bremsscheibe im Aufnahmespalt (17) der Druckschalter (55) entgegen der Federkraft des ersten Federmittels (61) betätigt wird und eine verbleibende Relativbewegung zwischen der Bremsscheibenerkennungseinrichtung (47) und dem Betätigungsabschnitt (19) von dem zweiten Federmittel (69) kompensiert wird.

2. Bremsscheibenschloss nach Anspruch 1,
**dadurch gekennzeichnet,**
**dass** in der Sicherungsstellung bei Vorhandensein einer Bremsscheibe im Aufnahmespalt (17) die von dem ersten Federmittel (61) ausgeübte Federkraft kleiner ist als die von dem zweiten Federmittel (69) ausgeübte Federkraft, wobei bevorzugt die Federkonstante des ersten Federmittels (61) kleiner ist als die Federkonstante des zweiten Federmittels (69).

3. Bremsscheibenschloss nach Anspruch 1 oder 2,
**dadurch gekennzeichnet,**
**dass** das erste Federmittel (61) und das zweite Federmittel (69) in im Wesentlichen dieselbe Richtung wirken.

4. Bremsscheibenschloss nach einem der vorstehenden Ansprüche,
**dadurch gekennzeichnet,**
**dass** der Betätigungsabschnitt (19) und der Druckschalter (55) verschwenkbar zueinander angeordnet sind.

5. Bremsscheibenschloss nach einem der vorstehenden Ansprüche,
**dadurch gekennzeichnet,**
**dass** der Druckschalter (55) starr an einem Gehäuse (51) der Alarmeinrichtung (49), insbesondere für wenigstens eine Batterie (53), angebracht ist, wobei bevorzugt der Betätigungsabschnitt (19) und das Gehäuse (51) der Alarmeinrichtung (49) verschwenkbar zueinander angeordnet sind.

6. Bremsscheibenschloss nach einem der vorstehenden Ansprüche,
**dadurch gekennzeichnet,**
**dass** ein Schlosskörper (11) vorgesehen ist, der einen Abstützabschnitt (13) und einen Hintergreifungsbügel (15) aufweist, die den Aufnahmespalt (17) begrenzen, wobei der Betätigungsabschnitt (19) bezüglich des Abstützabschnitts (13) und/oder bezüglich des Hintergreifungsbügels (15) beweglich, insbesondere verschwenkbar, gelagert ist.

7. Bremsscheibenschloss nach Anspruch 6,
**dadurch gekennzeichnet,**
**dass** ein drittes Federmittel (71) vorgesehen ist, über das der Schalterkörper (57) mit dem Schlosskörper (11) gekoppelt ist, wobei bevorzugt der Schalterkörper (57) über das dritte Federmittel (71) mit dem Abstützabschnitt (13) oder mit dem Hintergreifungsbügel (15) gekoppelt ist.

8. Bremsscheibenschloss nach Anspruch 7,
**dadurch gekennzeichnet,**
**dass** der Betätigungsabschnitt (19) über das zweite Federmittel (69) und das dritte Federmittel (71) in die Freigabestellung vorgespannt ist.

9. Bremsscheibenschloss nach Anspruch 7 oder 8,
**dadurch gekennzeichnet,**
**dass** das zweite Federmittel (69) und das dritte Federmittel (71) im Wesentlichen identisch sind, zumindest identische Federkonstanten besitzen.

10. Bremsscheibenschloss nach einem der Ansprüche 6 bis 9,
**dadurch gekennzeichnet,**
**dass** der Abstützabschnitt (13) der Bremsscheibenerkennungseinrichtung (47) entspricht.

11. Bremsscheibenschloss nach einem der vorstehenden Ansprüche,
**dadurch gekennzeichnet,**
**dass** ein Anschlag (73) für die Bremsscheibenerkennungseinrichtung (47) vorgesehen ist, um den von dem ersten Federmittel (61) aufgenommenen Teil der Relativbewegung zwischen der Bremsscheibenerkennungseinrichtung (47) und dem Betätigungsabschnitt (19) zu begrenzen.

12. Bremsscheibenschloss nach einem der vorstehenden Ansprüche,
**dadurch gekennzeichnet,**
**dass** die Bremsscheibenerkennungseinrichtung (47) und der Druckschalter (55) verschwenkbar zueinander angeordnet sind, wobei bevorzugt der Betätigungsabschnitt (19), die Bremsscheibenerkennungseinrichtung (47) und der Druckschalter (55) eine gemeinsame Schwenkachse (21) aufweisen.

13. Bremsscheibenschloss nach einem der vorstehenden Ansprüche,
**dadurch gekennzeichnet,**
**dass** ein Arretiermechanismus (187) vorgesehen ist, wobei die Bremsscheibenerkennungseinrichtung (47) in der Sicherungsstellung mittels des Arretiermechanismus (187) in der den Druckschalter (55) betätigenden Position gehalten ist.

14. Bremsscheibenschloss nach einem der vorstehenden Ansprüche,
**dadurch gekennzeichnet,**
**dass** das Kontaktelement (59) mittels des ersten Federmittels (61) bezüglich des Schalterkörpers (57) des Druckschalters (55) vorgespannt ist und/oder in der Freigabestellung des Betätigungsabschnitts (19) der Schalterkörper (57) über das dritte Federmittel (71) aus dem Aufnahmespalt (17) gedrängt ist.

15. Bremsscheibenschloss nach einem der vorstehenden Ansprüche,
**dadurch gekennzeichnet,**
**dass** der Betätigungsabschnitt (19) und die Bremsscheibenerkennungseinrichtung (47) derart gekoppelt sind, dass bei der Bewegung des Betätigungsabschnitts (19) in die Sicherungsstellung die Bremsscheibenerkennungseinrichtung (47) mitbewegt wird.

## Claims

1. A brake disk lock having a receiving gap (17) for the receiving of a brake disk, comprising:
a securing section (27, 127) for the closing of the receiving gap (17);
an alarm device (49) for the output of an alarm signal, with the alarm device (49) having a motion sensor;
a movable brake disk recognition device (47) for detecting whether a brake disk is located in the receiving gap (17);
a pressure switch (55) having a contact element (59) which is movable by the brake disk recognition device (47) against the spring force of a first spring means (61) and relative to a switch body (57) of the pressure switch (55) to activate the alarm device (49); and
an actuation section (19) which is movable out of a release position into a securing position to close the receiving gap (17) by means of the securing section (27, 127).
**characterized in that**
a second spring means (69) is provided via which the actuation section (19) is prestressed into the release position, with the switch body (57) being coupled to the actuation section (19) via the second spring means (69), and with the two spring means (61, 69) being matched to one another such that, on the movement of the actuation section (19) into the securing position and on the presence of a brake disk in the receiving gap (17), the pressure switch (55) is actuated against the spring force of the first spring means (61) and a remaining relative movement between the brake disk recognition device (47) and the actuation section (19) is compensated by the second spring means (69).

2. A brake disk lock in accordance with claim 1, **characterized in that**, in the securing position and on the presence of a brake disk in the receiving gap (17), the spring force exerted by the first spring means (61) is smaller than the spring force exerted by the second spring means (69), with the spring constant of the first spring means (61) being smaller than the spring constant of the second spring means (69).

3. A brake disk lock in accordance with claim 1 or claim 2, **characterized in that** the first spring means (61) and the second spring means (69) act in substantially the same direction.

4. A brake disk lock in accordance with any one of the preceding claims, **characterized in that** the actuation section (19) and the pressure switch (55) are arranged pivotably with respect to one another.

5. A brake disk lock in accordance with any one of the preceding claims,, **characterized in that** the pressure switch (55) is rigidly attached to a housing (51) of the alarm device (49), in particular for at least one battery (53), with preferably the actuation section (19) and the housing (51) of the alarm device (49) being arranged pivotably with respect to one another.

6. A brake disk lock in accordance with any one of the preceding claims,, **characterized in that** a lock body (11) is provided which has a support section (13) and an engagement hoop (15) which bound the receiving gap (17), with the actuation section (19) being supported movably, in particular pivotably, with respect to the support section (13) and/or with respect to the engagement hoop (15).

7. A brake disk lock in accordance with claim 6, **characterized in that** a third spring means (71) is provided via which the switch body (57) is coupled to the lock body (11), with the switch body (57) preferably being coupled to the support section (13) or to the engagement hoop (15) via the third spring means (71).

8. A brake disk lock in accordance with any one of the preceding claims,, **characterized in that** the actuation section (19) is prestressed into the release position via the second spring means (69) and the third spring means (71).

9. A brake disk lock in accordance with claim 7 or claim 8, **characterized in that** the second spring means (69) and the third spring means (71) are substantially identical; they at least have identical spring constants.

10. A brake disk lock in accordance with any one of the claims 6 to 9, **characterized in that** the support section (13) corresponds to the brake disk recognition device (47).

11. A brake disk lock in accordance with any one of the preceding claims, **characterized in that** an abutment (73) is provided for the brake disk recognition device (47) to bound the part of the relative movement between the brake disk recognition device (47) and the actuation section (19) taken up by the first spring means (61).

12. A brake disk lock in accordance with any one of the preceding claims, **characterized in that** the brake disk recognition device (47) and the pressure switch (55) are arranged pivotably with respect to one another, with the actuation section (19), the brake disk recognition device (47) and the pressure switch (55) preferably having a common pivot axis (21).

13. A brake disk lock in accordance with any one of the preceding claims, **characterized in that** a locking mechanism (187) is provided, with the brake disk recognition device (47) being held in the position actuating the pressure switch (55) by means of the locking mechanism (187) in the securing position.

14. A brake disk lock in accordance with any one of the preceding claims, **characterized in that** the contact element (59) is prestressed by means of the first spring means (61) with respect to the switch body (57) of the pressure switch (55); and/or **in that** the switch body (57) is urged out of the receiving gap (17) via the third spring means (71) in the release position of the actuation section (19).

15. A brake disk lock in accordance with any one of the preceding claims, **characterized in that** the actuation section (19) and the brake disk recognition device (47) are coupled such that the brake disk recognition device (47) is moved along on the movement of the actuation section (19) into the securing position.

## Revendications

1. Serrure sur disque de frein comprenant une fente de réception (17) pour la réception d'un disque de frein, comprenant :
une portion de blocage (27, 127) pour fermer la fente de réception (17),
un système d'alarme (49) pour délivrer un signal d'alarme, le système d'alarme (49) comprenant un capteur de déplacement,
un système de reconnaissance mobile de disque de frein (47) pour détecter si un disque de frein se trouve dans la fente de réception (17),
un commutateur à pression (55) avec un élément de contact (59) qui est déplaçable par le système de reconnaissance de disque de frein (47) à l'encontre de la force élastique d'un premier organe à ressort (61) et par rapport à un corps de commutateur (57) du commutateur à pression (55) afin d'activer le système d'alarme (49), et
une portion d'actionnement (19) qui est déplaçable depuis une position de libération jusque dans une position de blocage afin de fermer la fente de réception (17) au moyen de la portion de blocage (27, 127),
**caractérisée en ce qu'**il est prévu un second organe à ressort (69) au moyen duquel la portion d'actionnement (19) est précontrainte vers la position de libération, et le corps de commutateur (57) est couplé à la portion d'actionnement (19) via le second organe à ressort (69), et les deux organes à ressort (61, 69) sont accordés l'un à l'autre de telle façon que lors du mouvement de la portion d'actionnement (19) vers la position de blocage et en présence d'un disque de frein dans la fente de réception (17), le commutateur à pression (55) est actionné à l'encontre de la force élastique du premier organe à ressort (61) et un mouvement relatif résiduel entre le système de reconnaissance de disque de frein (47) et le tronçon d'actionnement (19) est compensé par le second organe à ressort (69).

2. Serrure sur disque de frein selon la revendication 1,
**caractérisée en ce que**, dans la position de blocage et en présence d'un disque de frein dans la fente de réception (17), la force élastique exercée par le premier organe à ressort (61) est inférieure à la force élastique exercée par le second organe à ressort (69), et la constante élastique du premier organe à ressort (61) est de préférence inférieure à la constante élastique du second organe à ressort (69).

3. Serrure sur disque de frein selon la revendication 1 ou 2,
**caractérisée en ce que** le premier organe à ressort (61) et le second organe à ressort (69) agissent sensiblement dans la même direction.

4. Serrure sur disque de frein selon l'une des revendications précédentes,
**caractérisée en ce que** la portion d'actionnement (19) et le commutateur à pression (55) sont agencés en pivotement l'un par rapport à l'autre.

5. Serrure sur disque de frein selon l'une des revendications précédentes,
**caractérisée en ce que** le commutateur à pression (55) est agencé rigidement sur un boîtier (51) du système d'alarme (49), en particulier pour au moins une pile ou batterie (53), et la portion d'actionnement (19) et le boîtier (51) du système d'alarme (49) sont de préférence agencés en pivotement l'un par rapport à l'autre.

6. Serrure sur disque de frein selon l'une des revendications précédentes,
**caractérisée en ce qu'**il est prévu un corps de serrure (11) qui comprend un tronçon de soutien (13) et un arceau d'engagement postérieur (15), qui délimitent la fente de réception (17), la portion d'actionnement (19) étant montée mobile, en particulier pivotante, par rapport au tronçon de soutien (13) et/ou par rapport à l'arceau d'engagement postérieur (15).

7. Serrure sur disque de frein selon la revendication 6,
**caractérisée en ce qu'**il est prévu un troisième organe à ressort (71) au moyen duquel le corps de commutateur (57) est couplé au corps de serrure (11), et le corps de commutateur (57) est couplé de préférence via le troisième organe à ressort (71) avec le tronçon de soutien (13) ou avec l'arceau d'engagement postérieur (15).

8. Serrure sur disque de frein selon la revendication 7,
**caractérisée en ce que** la portion d'actionnement (19) est précontrainte dans la position de libération via le second organe à ressort (69) et le troisième organe à ressort (71).

9. Serrures sur disque de frein selon la revendication 7 ou 8,
**caractérisée en ce que** le second organe à ressort (69) et le troisième organe à ressort (71) sont sensiblement identiques, ou possèdent tout au moins des constantes élastiques identiques.

10. Serrure sur disque de frein selon l'une des revendications 6 à 9,
**caractérisée en ce que** le tronçon de soutien (13) correspond au système de reconnaissance de disque de frein (47).

11. Serrure sur disque de frein selon l'une des revendications précédentes,
**caractérisée en ce qu'**il est prévu une butée (73) pour le système de reconnaissance de disque de frein (47), afin de limiter la partie du mouvement relatif entre le système de reconnaissance de disque de frein (47) et la portion d'actionnement (19) qui est encaissée par le premier organe à ressort (61).

12. Serrure sur disque de frein selon l'une des revendications précédentes,
**caractérisée en ce que** le système de reconnaissance de disque de frein (47) et le commutateur à pression (55) sont agencés en pivotement l'un par rapport à l'autre, et la portion d'actionnement (19), le système de reconnaissance de disque de frein (47) et le commutateur à pression (55) présentent de préférence un axe de pivotement commun (21).

13. Serrure sur disque de frein selon l'une des revendications précédentes,
**caractérisée en ce qu'**il est prévu un mécanisme d'arrêt (187), tel que le système de reconnaissance de disque de frein (47) en situation de blocage est maintenu au moyen du mécanisme d'arrêt (187) dans la position d'actionnement du commutateur à pression (55).

14. Serrure sur disque de frein selon l'une des revendications précédentes,
**caractérisée en ce que** l'élément de contact (59) est précontraint au moyen du premier organe à ressort (61) par rapport au corps de commutateur (57) du commutateur à pression (55) et/ou **en ce que** dans la position de libération de la portion d'actionnement (19) le corps de commutateur (57) est forcé hors de la fente de réception (17) par le troisième organe à ressort (71).

15. Serrure sur disque de frein selon l'une des revendications précédentes,
**caractérisée en ce que** la portion d'actionnement (19) et le système de reconnaissance de disque de frein (47) sont accouplés de telle façon que lors du mouvement de la portion d'actionnement (19) vers la position de blocage le système de reconnaissance de disque de frein (47) est déplacé conjointement.
